(19) Europäisches Patentamt
European Patent Office
Office européen des brevets

(11) **EP 1 830 105 A1**

(12) **EUROPEAN PATENT APPLICATION**
published in accordance with Art. 158(3) EPC

(43) Date of publication:
**05.09.2007 Bulletin 2007/36**

(51) Int Cl.:
**F16H 25/22** (2006.01)

(21) Application number: **05820371.2**

(22) Date of filing: **21.12.2005**

(86) International application number:
**PCT/JP2005/023537**

(87) International publication number:
**WO 2006/068201 (29.06.2006 Gazette 2006/26)**

(84) Designated Contracting States:
**DE**

(30) Priority: **22.12.2004 JP 2004370816**

(71) Applicant: **NSK LTD.**
**Shinagawa-ku,**
**Tokyo 141-8560 (JP)**

(72) Inventor: **MINAKUTI, Junji c/o NSK Precision Co.,**
**Ltd.**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **BALL SCREW**

(57) In a ball screw 1 in which a screw shaft 2 having a spiral-shaped screw shaft side ball rolling groove 6 in an outer periphery is screwed into a nut 4 having in an inner periphery a nut side ball rolling groove 8 facing the screw shaft side ball rolling groove 6, a plurality of load balls 10 is rollably disposed in a spiral-shaped load rolling path 12 formed by the screw shaft side ball rolling groove 6 and the nut side ball rolling groove 8, spacer balls 20 having a smaller diameter than load balls 10 are evenly disposed with respect to strings of the load balls 10, and a ratio of a number of spacer balls 20 to a number of load balls 10 (a spacer ball ratio) is set to be in a range of 1% to 5%.

FIG. 2

EP 1 830 105 A1

**Description**

[Technical Field]

The present invention relates to a ball screw used in various kinds of feeding apparatus, and particularly to a ball screw requiring a high load capacity for use in a machine tool or the like.

[Background Art]

Heretofore, as a ball screw used in a belt type continuously variable transmission (CVT) for an automobile or the like, there has been one shown in Patent Document 1. In the ball screw, a screw shaft having a spiral-shaped screw shaft side ball rolling groove in an outer periphery is screwed into a nut having in an inner periphery a nut side ball rolling groove facing the screw shaft side ball rolling groove.
Also, a load rolling path is formed by the screw shaft side ball rolling groove and the nut side ball rolling groove, and a plurality of load balls is rollably disposed in the load rolling path. Then, a configuration is such that the nut, by rotating relative to the screw shaft, moves in an axial direction via a rolling motion of the load balls.
Generally, the following is known about a relative slippage of the ball screw.
A load distribution exists in a load area of the ball screw, and loads acting on the individual balls (ball loads) are not constant. A ball revolution angle per revolution of the shaft is represented by the following equation.
Equation 1

$$U = \frac{\pi d_m}{2\cos\beta}\left\{1 - \left(\frac{Dw}{d_m}\cos\alpha\cos^2\beta\right)^2\right\}$$

Herein, each variable indicates the following.
U: Ball revolution angle
$d_m$: Diameter of ball center locus in load rolling path
Dw: Ball diameter
α: Contact angle
β: Lead angle
The contact angle is, in a perpendicular section of the groove, an angle formed between a line connecting a ball center and a groove contact point center, and a perpendicular line of a screw shaft center line passing through the ball center. As the contact point center slides in a direction of a land of the groove as the ball load increases, the contact angle varies in accordance with the ball load. Also, the above equation indicates that the ball revolution angle is determined by the contact angle. As the individual ball loads are not constant, the individual contact angles also differ. Consequently, the revolution angles of the individual balls are not constant, either.
As the revolution angles of the individual balls differ in a circulation path of an identical ball screw, in some cases, adjacent balls approximate and abut each other in the load area. At this time, as both balls rotate in the same direction under a load, a "relative slippage" occurs in which the balls rub strongly against each other, causing an early abrasion of the balls. However, the ball screw having the load area and a no-load area, no relative slippage occurs when the balls pass through the no-load area, while the relative slippage occurs when the balls enter the load area again.
The relative slippage is undesirable because it causes an early-stage abrasion of the balls. For that reason, in order to reduce the relative slippage, it has heretofore been known that spacer balls are interposed among the load balls. The spacer balls having a smaller diameter than the load balls are disposed between a plurality of the load balls, and a ratio of a number of the spacer balls to a number of the load balls is any one of 4: 1 (20%), 3:1 (25%), 2:1 (about 33%) or 1:1 (50%) . Then, by causing load balls, of the plurality of load balls, in contact with the spacer balls to rotate forward on a side in contact with the spacer balls, the relative slippage occurring between the individual balls is reduced, improving an operation efficiency.
[Patent Document 1] JP-A-2002-188705 (Fig. 1)
However, in the existing ball screw described heretofore, as the ratio of the number of spacer balls to the number of load balls is high, and a number of load balls bearing the load decreases, a load capacity and a rigidity of the ball screw decreases.

[Disclosure of the Invention]

[Problems that the Invention is to Solve]

The invention, having been conceived focusing on the heretofore described kind of problem, has an object of providing a ball screw which, as well as reducing a relative slippage occurring between balls and improving an operation efficiency, by preventing a decrease in a load capacity and a rigidity, can improve an operability and a durability.

[Means for Solving the Problems]

In order to achieve the object, according to a first aspect of the invention, there is provided a

According to the aspect of the invention, as compared with a specification of using no spacer balls, by causing load balls, of the plurality of load balls, in contact with the spacer balls to rotate forward on a side in contact with the spacer balls, as well as a relative slippage occurring between balls decreasing, and an operation efficiency of the ball screw improving, a abrasion rate of the load balls decreases significantly. Also, by setting a ratio of the number of the spacer balls to the load balls to be in the range of 1% to 5%, it is possible to prevent a decrease in a load capacity and a rigidity of the ball screw, as compared with Patent Document 1.

At this point, a description will be given of a reason for setting the ratio of the number of the spacer balls to the load balls to be in the range of 1% to 5%. In the event that the ratio of the number of the spacer balls to the load balls is set at 1% or higher, the ball abrasion rate of the load balls decreases significantly, as compared with a case in which all the balls are used as the load balls. Also, in the event that the ratio of the number of the spacer balls to the load balls exceeds 5%, the abrasion rate of the load balls hardly decreases. Therefore, even in the event that the ratio of the number of the spacer balls is set to exceed 5%, as the decrease in the abrasion rate of the load balls cannot be expected, the setting merely leads to the decrease in the load capacity and rigidity of the ball screw. Consequently, the ratio of the number of the spacer balls to the load balls is set to be in the range of 1% to 5%.

Next, according to a second aspect of the invention, the spacer balls are evenly disposed with respect to strings of the load balls.

According to the aspect of the invention, as the load balls are evenly disposed in the load rolling path, it is possible to prevent the decrease in the load capacity and rigidity of the ball screw.

[Advantage of the Invention]

According to the aspects of the invention, with a minimum necessary number of the spacer balls, as well as the relative slippage occurring between balls decreasing, and the operation efficiency of the ball screw improving, as the decrease in the load capacity and rigidity of the ball screw is prevented, it is possible to improve the operability and durability of the ball screw.

[Brief Description of the Drawings]

Fig. 1 is an axial sectional view of a ball screw of the invention;
Fig. 2 is a sectional view of a main portion of the ball screw of the invention; and
Fig. 3 is a diagram showing a result of an endurance life test on the ball screw of the invention.

[Description of Reference Numerals and Signs]

1        Ball screw
2        Screw shaft
4        Nut
6        Screw shaft side ball rolling groove
8        Nut side ball rolling groove
10       Load ball
12       Load rolling path
14       Circulation tube
16       Return path

20    Spacer ball

[Best Mode for Carrying out the Invention]

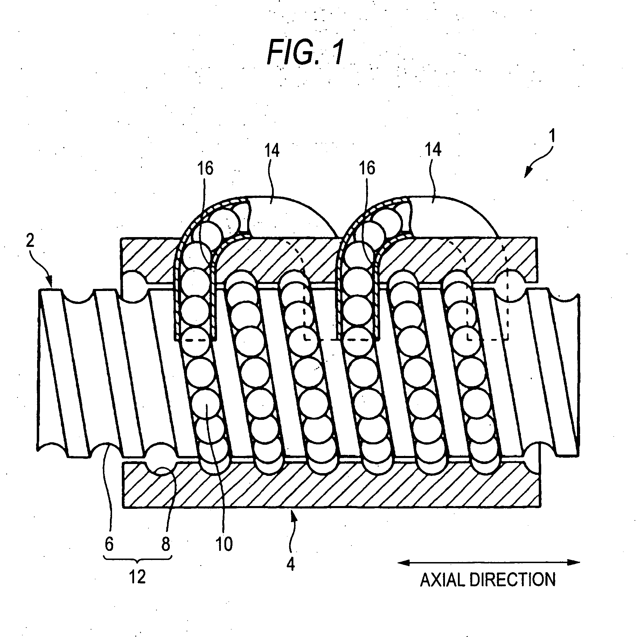

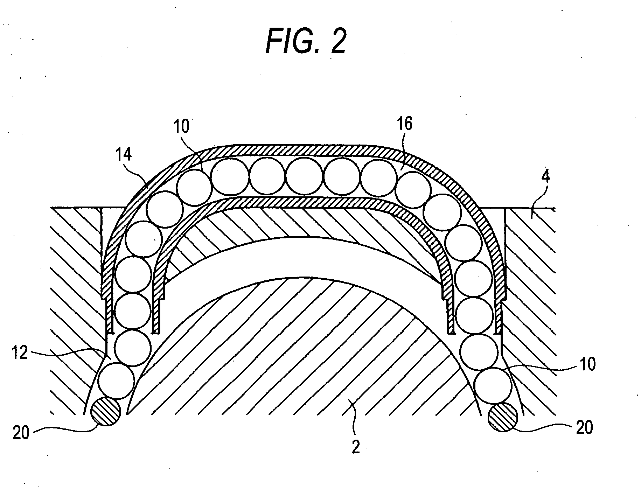

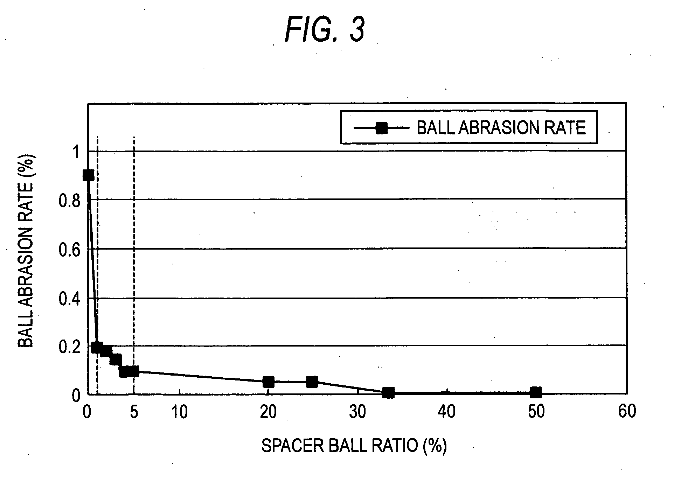

Next, a description will be given of an embodiment of the invention, while referring to the drawings.
Firstly, a description will be given of a configuration of the embodiment of the invention, with reference to Figs. 1 and 2.
Fig. 1 is an axial sectional view of a ball screw 1 of the invention, and Fig. 2 is a sectional view of a main portion in Fig. 1.
As shown in Figs. 1 and 2, in the ball screw 1 of the embodiment, a screw shaft 2 having a spiral-shaped screw shaft side ball rolling groove 6 in an outer periphery is screwed into a nut 4 having in an inner periphery a nut side ball rolling path B facing the screw shaft side ball rolling groove 6.
Also, a spiral-shaped load rolling path 12 is formed by the screw shaft side ball rolling groove 6 and the nut side ball rolling groove 8, and a plurality of load balls 10 are rollably disposed in the load rolling path 12. Then, a configuration is such that the nut 4, by rotating relative to the screw shaft 2, moves in an axial direction via a rolling motion of the load balls 10.
Spacer balls 20 having a smaller diameter than the load balls 10 are disposed among the plurality of load balls 10. The load balls 10 are formed of a steel material such as high-carbon chromium bearing steel, and the spacer balls 20 are formed of a material (for example, a synthetic resin) having a smaller elastic coefficient than the load balls 10, with a diameter smaller than that of the load balls 10 by the order of 20μm to 50μm.
Herein, a ratio of a number of spacer balls 20 to a number of load balls is in a range of 1% to 5%. Also, the spacer balls 20 are evenly disposed with respect to strings of load balls 10, and the load balls 10 in one string disposed between adjacent spacer balls 20 are equal in number to those in another string. Fig. 2 shows a condition in which the ratio of the number of spacer balls 20 to the number of load balls 10 is 5%, that is, a condition in which the number of spacer balls 20 disposed between the strings of load balls 10 is the largest in the invention. That is, the ratio of the number of spacer balls to the number of load balls is 19:1 (5%).
Also, approximately U-shaped circulation tubes 14, being attached to an outer periphery of the nut 4, each have formed therein a return path 16 of which either end communicates with the load rolling path 12. Then, an endless circulation path for the load balls 10 and the spacer balls 20 is formed by the load rolling path 12 and the return paths 16.
Next, a description will be given of an operation, a working effect and the like of the ball screw 1 having the heretofore described configuration.
When the nut 4 rotates relative to the screw shaft 2, and moves in the axial direction via the rolling motion of the load balls 10, the load balls 10 and the spacer balls 20 rollingly circulate in the endless circulation path. At this time, as load balls, of the load balls circulating in the endless circulation path, in contact with the spacer balls 20 rotate forward on a side in contact with the spacer balls 20, a relative slippage occurring between the balls decreases.
Consequently, in the case of the ball screw 1 of the embodiment, when the nut 4 rotates relative to the screw shaft 2, as the relative slippage occurring between balls decreases, an operation efficiency of the ball screw 1 improves, enabling an improvement in an operability of the ball screw 1.
Also, as the ratio of the number of spacer balls 20 to the number of load balls 10 is set to be in the range of 1% to 5%, it is possible, with a minimum necessary number of spacer balls, to substantially prevent a decrease in a load capacity and a rigidity of the ball screw, and reduce an initial abrasion occurring in the load balls 10. Consequently, it is possible to improve a durability of the ball screw 1.
Hereafter, a description will be given, with reference to Fig. 3, of a relationship between the ratio of the number of spacer balls 20 to the number of load balls 10, and the initial abrasion occurring in the load balls 10.
Fig. 3 is a graph showing a relationship between the ratio of the number of spacer balls 20 to the number of load balls 10, and an initial abrasion volume of the load balls 10, in a case in which an excessive load is applied to the ball screw 1 of the embodiment using an existing ball screw endurance life testing machine. Herein, the excessive load is set at 30000N, and the initial abrasion volume of the load balls 10 is set as an abrasion rate of the load balls 10 after a 100km run.
Conditions in the present endurance life test are shown hereafter.
Bearing number of ball screw in use: NSK ball screw 50×10×1000-C5
Basic dynamic load rating: 64600N
Name of testing machine: Ball screw endurance life testing machine manufactured by NSK
Pre-load: 2000N
Test load: Axial load=30000N
Maximum speed: 1000min$^{-1}$
Stoke: 500mm
Lubricating grease: Albania No.2 (Showa Shell Sekiyu K.K.)
Also, the ratio of the number of spacer balls 20 to the number of load balls 10 (hereafter called a spacer ball ratio) is set in ten ways: 0%, 1%, 2%, 3%, 4%, 5%, 20%, 25%, 33.4% and 50%, and the endurance life test is carried out at each spacer ball ratio.

A vertical axis in the figure indicates a ball abrasion rate, and a horizontal axis indicates the spacer ball ratio. The ball abrasion rate is a value obtained by averaging rates of change in dimension occurring in the load balls 10 after 100km run in the endurance life test at each spacer ball ratio.

As shown in the figure, in the event that the spacer ball ratio is 1% or lower, the ball abrasion rate of the load balls 10 decreases significantly, as compared with a case in which the spacer ball ratio is 0%. Also, in the event that the spacer ball ratio exceeds 5%, the abrasion rate of the load balls hardly decreases.

Consequently, by setting the spacer ball ratio to be in the range of 1% to 5% (in the range indicated by R in the figure), with the minimum necessary number of spacer balls, as well as the abrasion rate of the load balls decreasing significantly, it is possible to substantially prevent the load capacity and rigidity of the ball screw 1 from being reduced, enabling an improvement in a load bearing of the ball screw 1. Also, by the abrasion rate of the load balls 10 decreasing significantly, it is possible to extend a life of the ball screw 1.

Also, as the spacer balls 20 are evenly disposed to the strings of load balls 10, a load is evenly applied to the load balls 10 loaded in the load rolling path 12, enabling an improvement in the durability of the ball screw 1.

Although the spacer balls 20 are evenly disposed between the plurality of load balls 10 in the ball screw 1 of the embodiment, the invention not being limited to this, it is acceptable that the load balls 10 in one string disposed between adjacent spacer balls 20 differ in number from those in another string.

Also, although the spacer balls 20 are formed to have a smaller diameter than the balls 10 by the order of $20\mu$m to $50\mu$m in the ball screw 1 of the embodiment, the invention not being limited to this, it is sufficient that the spacer balls 20 are smaller in diameter than the load balls 10.

Although the invention has been described in detail and with reference to the specified embodiment, it is obvious to those skilled in the art that various modifications and alterations can be made without departing from the spirit and scope of the invention.

The present application is based on Japanese Patent Application (No.2004-370816) filed on December 22, 2004, and the contents thereof are incorporated herein by reference.

[Industrial Applicability]

According to the invention, with the minimum necessary number of spacer balls, as well as the relative slippage occurring between balls decreasing and the operation efficiency of the ball screw improving, as the decrease in the load capacity and rigidity of the ball screw is prevented, the ball screw improved in the operability and durability is provided.

**Claims**

1. A ball screw comprising:

    a screw shaft having a spiral-shaped screw shaft side ball rolling groove in an outer periphery thereof;
    a nut having in an inner periphery a nut side ball rolling groove facing the screw shaft side ball rolling groove;
    a plurality of load balls rollably disposed in a load rolling path formed between both ball rolling grooves; and
    spacer balls which is disposed between the load balls and have a smaller diameter than the load balls, wherein a ratio of a number of the spacer balls to a number of the load balls is set to be in a range of 1% to 5%.

2. The ball screw according to claim 1, wherein
   the spacer balls are evenly disposed with respect to strings of the load balls.

# FIG. 1

AXIAL DIRECTION

EP 1 830 105 A1

FIG. 2

7

# FIG. 3

## INTERNATIONAL SEARCH REPORT

| | International application No. |
|---|---|
| | PCT/JP2005/023537 |

**A. CLASSIFICATION OF SUBJECT MATTER**
*F16H25/22*(2006.01)

According to International Patent Classification (IPC) or to both national classification and IPC

**B. FIELDS SEARCHED**

Minimum documentation searched (classification system followed by classification symbols)
*F16H25/22*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 54-153962 A  (Hitachi Medical Corp.), 04 December, 1979 (04.12.79), Claims; Figs. 2, 3 (Family: none) | 1-2 |
| A | JP 2002-188705 A  (NTN Corp.), 05 July, 2002 (05.07.02), Full text (Family: none) | 1-2 |

☐ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 January, 2006 (16.01.06) | 31 January, 2006 (31.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002188705 A
- JP 2004370816 A